# EUROPÄISCHE PATENTANMELDUNG

(11) **EP 1 347 556 A2**
(43) Veröffentlichungstag der Anmeldung: **24.09.2003**
(21) Anmeldenummer: 03005898.6
(22) Anmeldetag: 17.03.2003
(51) Int. Cl.: H02K 3/50

(54) **Stator für eine elektrische Maschine**

(30) Priorität: 21.03.2002 DE 10212425
(71) Anmelder: ROBERT BOSCH GMBH, 70442 Stuttgart (DE)
(72) Erfinder: Ossenkopp, Stefan, 31177 Harsum (DE)

(57) **Zusammenfassung**

Ein Stator für eine elektrische Maschine umfasst einen Innenring (1), einen äußeren Rückschlussring (2) und einen Anschlussring (3). Der Innenring (1) ist mit Polschuhen (8) und außen offenen Wickelnuten (10) zur Aufnahme einer Vielzahl von Wicklungsspulen (15) versehen. Der äußere Rückschlussring (2) weist nach innen gerichtete Formschlusselemente (16) auf, die mit nach außen gerichteten Formschluss-Gegenelementen (12) der Polschuhe (8) in Eingriff stehen. Durch diese Ausgestaltung wird eine besonders wirtschaftliche Fertigung eines Stators erreicht.

## Beschreibung

Die Erfindung betrifft einen Stator einer elektrischen Maschine.

Elektrische Maschinen, wie z.B. Asynchronmotoren, Synchronmotoren oder bürstenlose Gleichstrommotoren (BLDC-Motoren) weisen bekanntlich einen Stator beziehungsweise Ständer auf. Ein derartigen Stator besteht aus einem Statorblechpaket, in dessen Nuten vorzugsweise Kupferleiter dabei eingelegt beziehungsweise eingezogen werden. Prinzipiell werden zum Einlegen der Kupferleiter die beiden folgenden Verfahren angewandt:
a) das Einziehverfahren, wobei bereits vorgefertigte Wicklungsspulen oder Spulenelemente entweder von Hand oder mittels spezieller Werkzeuge in das Statorblechpaket eingezogen werden; und
b) das Hub-Schwenk-Verfahren, bei dem ein Wicklungsdraht direkt in das Statorblechpaket eingebracht wird.

Diese beiden Verfahren sind automatisierbar und werden zur Innenbewicklung eines Statorblechpakets herangezogen. Nachteilig bei dem Einziehverfahren ist allerdings, dass die bereits vorgefertigten Wicklungsspulen beim Einziehen in das Statorblechpaket an dessen Wickelnuten angepasst werden müssen, was einen zusätzlichen Arbeitsschritt erfordert. Das Hub-Schwenk-Verfahren ist ebenfalls sehr zeitintensiv. Dies steht einer wirtschaftlichen Fertigung entgegen. Des weiteren weisen diese beiden bekannten Verfahren den Nachteil auf, dass mit ihnen ein automatisiertes Verschalten der Wicklungsspulen nicht, beziehungsweise nur mit großem technischen Aufwand realisierbar ist.

Hiervon ausgehend liegt der Erfindung die Aufgabe zugrunde, einen Stator derart auszubilden, dass ein automatisierbares Wickelverfahren eingesetzt werden kann und das Verschalten der Wicklungsspulen maschinell durchführbar ist.

Diese Aufgabe wird durch die im Anspruch 1 angegebenen Merkmale gelöst.

Der Kern der Erfindung besteht darin, dass der Stator einen Innenring und einen äußeren Rückschlussring umfasst, wobei der Innenring außen offene Wickelnuten zur Aufnahme einer Vielzahl von Wicklungsspulen aufweist und mit dem äußeren Rückschlussring formschlüssig verbunden ist.

Durch diese Ausgestaltung des Stators sind automatisierbare Außenbewicklungsverfahren, wie zum Beispiel das Flyer-Verfahren beziehungsweise das Stecktechnik-Verfahren, einsetzbar, die ein maschinelles Kontaktieren der Wicklungsspulen gestatten. Eine Außenbewicklung ermöglicht außerdem breitere Wickelnuten in dem Innenring, das heißt, es können dickere Wickeldrähte in die Wickelnuten eingeführt werden, wodurch die Leistung der elektrischen Maschine gesteigert wird. Bei einer gesteckten Wicklung wird ferner der Füllfaktor der Wickelnuten erhöht, was sich ebenfalls positiv auf die Leistung der elektrischen Maschine auswirkt.

Durch die Ausgestaltung des Anschlussrings gemäß den Unteransprüchen 3 bis 5 wird eine besonders funktionssichere und automatisierbare Kontaktierung der Wicklungsspulen erreicht.

Nachfolgend wird die Erfindung anhand bevorzugter Ausführungsbeispiele in Verbindung mit der Zeichnung näher beschrieben. Dabei zeigen:
- Fig. 1: einen Längsschnitt durch einen erfindungsgemäßen Innenring gemäß einer ersten Ausführungsform;
- Fig. 2: eine Stirnseitenansicht des in Fig. 1 dargestellten Innenrings;
- Fig. 3: eine Stirnseitenansicht eines erfindungsgemäßen äußeren Rückschlussrings;
- Fig. 4: einen Längsschnitt durch einen Anschlussring;
- Fig. 5: eine Draufsicht auf den in Fig. 4 dargestellten Anschlussring;
- Fig. 6: eine schematische Schnittdarstellung durch einen Stator, der die in den Fig. 1 bis 5 dargestellten Komponenten umfasst;
- Fig. 7: eine Stirnseitenansicht des in Fig. 6 dargestellten Stators;
- Fig. 8: eine Hälfte eines erfindungsgemäßen, zweiteiligen Innenrings gemäß einer zweiten Ausführungsform, der mit einem Anschlussring einstückig ausgebildet ist;
- Fig. 9: einen schematischen Schnitt durch einen Polschuh;
- Fig. 10: eine Stirnseitenansicht des in Fig. 8 dargestellten Innenrings;
- Fig. 11: eine Stirnseitenansicht des in Fig. 10 dargestellten Innenrings, der bereits eingefügte Polschuhe umfasst;
- Fig. 12: eine Stirnseitenansicht eines Innenrings gemäß der zweiten Ausführungsform, wobei eine Hälfte des Innenrings auf einem Stützring angeordnet ist; und
- Fig. 13 bis 16: Teil-Stimseitenansichten eines erfindungsgemäßen Innenrings gemäß einer dritten Ausführungsform.

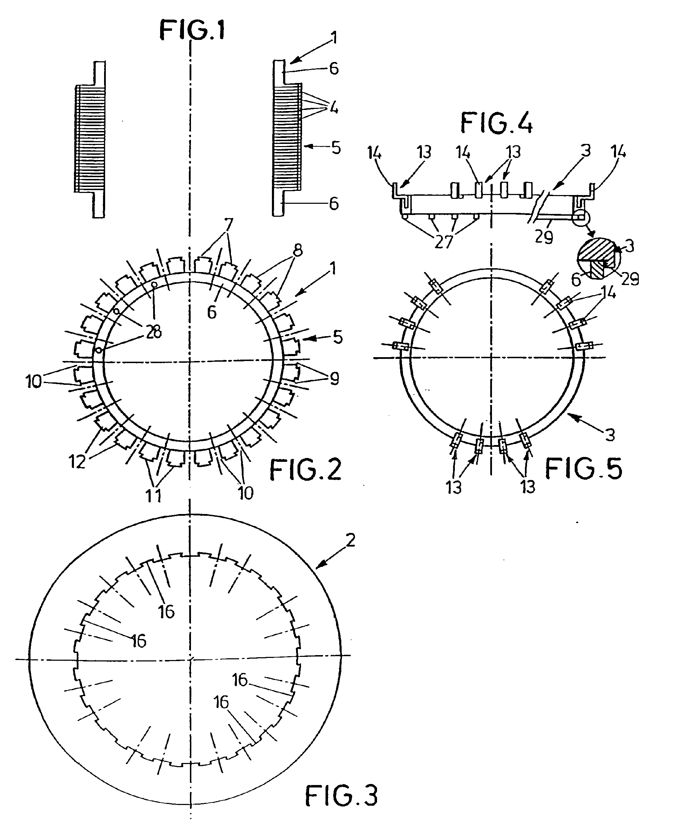

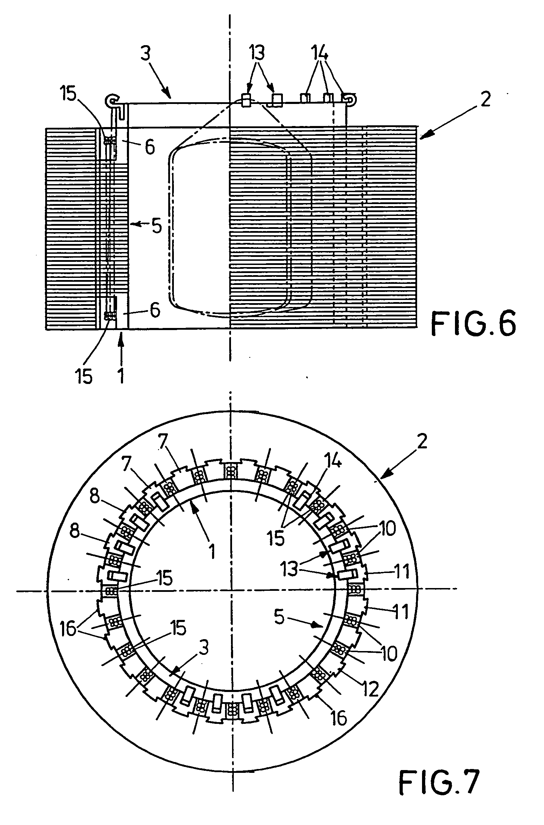

Im Folgenden wird unter Bezugnahme auf die Fig. 1 bis 7 eine erste Ausführungsform eines erfindungsgemäßen Stators für eine elektrische Maschine beschreiben. Der in den Fig. 6 und 7 komplett dargestellte Stator umfasst einen Innenring 1, einen äußeren Rückschlussring 2 und einen stirnseitigen Anschlussring 3. Der Anschlussring 3 kann auch als Anschlussscheibe ausgestaltet sein.

Der Innenring 1 weist eine Vielzahl von aufeinander gestapelten und miteinander verbundenen Blechlamellen 4 auf, die ein Statorblechpaket 5 bilden. An den Stirnseiten des Statorblechpakets 5 erstreckt sich jeweils eine umlaufende Abschlussschulter 6, deren Außendurchmesser kleiner ausgebildet ist, als der Außendurchmesser des Statorblechpakets 5. Die Innendurchmesser des Statorblechpakets 5 und der Abschlußschulter 6 sind identisch. Jede Blechlamelle 4 ist mit Polschuh-Stegen 7 versehen, die Polschuhe 8 ausbilden und sich radial erstrecken. Die Polschuh-Stege 7 sind mit der jeweiligen Blechlamelle 4 einstückig ausgebildet und sind über dem Umfang der Blechlamelle 4 voneinander beabstandet angeordnet. Durch die beabstandete Anordnung der Polschuh-Stege 7 liegen nach außen offene Ausnehmungen 9 vor, die im Statorblechpaket 5 Wickelnuten 10 bilden. Die Polschuh-Stege 7 weisen an ihrem freien Ende 11 einen schwalbenschwanzförmigen Verbindungsbereich 12 auf, der mit den Polschuh-Stegen 7 ebenfalls einstückig ausgebildet ist.

Der Anschlussring 3 liegt, wie aus Fig. 6 ersichtlich, an dem freien Ende einer der Abschlussschultern 6 an. Der Anschlussring 3 besteht aus Kunststoff und weist Anschlüsse 13 auf, die entweder aus Messing, Kupfer oder einer Kupferlegierung sind. Die Anschlüsse 13 erstrecken sich von der der Abschlussschulter 6 abgewandten Seite des Anschlussrings 3. Die Anschlüsse 13 sind in dem Anschlussring 3 fixiert und weisen einen hakenförmigen Anschlussbereich 14 auf. Insgesamt umfasst der Anschlussring 3 zwölf Anschlüsse 13, die in drei Vierergruppen angeordnet sind. Die Anzahl der Anschlüsse 13 ist abhängig von der Auslegung der elektrischen Maschine. Eine andere Anschluss-Anzahl ist ebenfalls möglich. Die Anschlüsse 13 sind jeweils mit einem scharfkantigen Kontaktierungsschlitz (nicht dargestellt) versehen.

Die Befestigung des Anschlussrings 3 an einer Abschlussschulter 6 kann beispielsweise über eine Rast- beziehungsweise Steckverbindung erfolgen. Der Anschlussring 3 weist auf der der Abschlussschulter 6 zugewandten Seite eine Vielzahl hervorstehender Verankerungsbolzen 27 (nur einige in Fig. 4 dargestellt) auf, die in entsprechenden, in der Abschlussschulter 6 ausgebildeten Ausnehmungen 28 (nur einige in Fig. 2 dargestellt) verankert werden. Die in der Abschlussschulter 6 ausgebildeten Ausnehmungen 28 sind jeweils im Bereich der Polschuh-Stege 7 angeordnet.

Bei einer anderen Befestigungsart des Anschlussrings 3 an einer Abschlussschulter 6 weist der Anschlussring 3 an der der Abschlussschulter 6 zugewandten Seite einen umlaufenden Ringsteg 29 (Fig. 4, rechter Abschnitt) auf, dessen Außenfläche fluchtend mit der Außenfläche des Anschlussrings 3 verläuft. Wie aus der vergrößerten Darstellung von Fig. 4 ersichtlich, ist die Innenfläche des Ringstegs 29 geriffelt und liegt an der Außenfläche der Abschlussschulter 6 an. Der Anschlussring 3 steht somit gegenüber der Abschlussschulter 6 über. Durch Wicklungsspulen 15, auf die nachfolgend noch näher eingegangen wird, wird der Anschlussring 3 gemäß diesen beiden Befestigungsarten auf dem Innenring 1 gehalten. Die Wicklungsspulen 15 üben eine in Längsrichtung des Stators wirkende Zugkraft auf den Anschlussring 3 aus.

Der Innenring 1 kann in einem Formwerkzeug mit einem Kunststoff umspritzt werden. Der Kunststoff haftet dabei auf dem Statorblechpaket 5, das aufgrund der Vielzahl von Blechlamellen 4 eine raue Oberfläche aufweist.

Wie insbesondere aus den Fig. 6 und 7 ersichtlich, nehmen die nach außen offenen Wickelnuten 10 des Innenrings 1 eine Vielzahl von isolierten Wicklungsspulen 15 auf. Da die Wickelnuten 10 außen offen sind, wird der Innenring 1 von außen bewickelt. In dem veranschaulichten Ausführungsbeispiel kommt das sogenannte Flyer-Verfahren zum Einsatz. Beim Bewickeln des Statorblechpakets 5 werden die die Wicklungsspulen 15 bildenden Wicklungsdrähte durch die nicht dargestellten Kontaktierungsschlitze der Anschlüsse 13 geführt. Da die Kontaktierungs-Schlitze scharfkantig sind, wird die Isolierung der Wicklungsdrähte durchdrungen, wodurch die Wicklungsspulen 15 kontaktiert werden. Die elektrische und fixierende Verbindung der Anschlüsse 13 mit den Wicklungsspulen 15 erfolgt durch das bekannte Warmpreß-Verfahren. Der Anschlußring 13 dient demgemäß zum Verschalten der Wicklungsspulen 15 und ist mit nicht dargestellten Leiterbahnen versehen, die die Anschlüsse 13 entsprechend einem Verschaltungsschema der Wicklungsspulen 15 elektrisch miteinander verbinden. Damit sind die einzelnen Wicklungsspulen 15 entsprechend den Wickelvorgaben verschaltet. Die Leiterbahnen können ein- oder mehrlagig in dem Anschlussring 13 angeordnet sein, wobei bei einer mehrlagigen Anordnung jeweils eine Isolationsschicht zwischen den einzelnen Lagen vorgesehen ist. Der Anschlussbereich 14 der Anschlüsse 13 wird nach dem Kontaktieren der Wicklungsspulen 15 umgebogen, wodurch die Wicklungsspulen 15 in ihrer Position festgelegt und kontaktiert werden. Der Anschlussbereich 14 dient als Anschlußfahne. Es ist ebenfalls denkbar, die Wicklungsspulen 15 im Anschlussbereich 14 der Anschlüsse 13 mit diesen zu verschweißen. Auch hierdurch erfolgt ein Kontaktieren.

Der magnetische, aus Blechlamellen gebildete Rückschlußring 2 umgibt den Innenring 1 und weist auf seiner dem Innenring 1 zugewandten Innenseite schwalbenschwanzförmige Formschlußelemente 16 auf. Die nach innen gerichteten Formschlußelemente 16 sind derart dimensioniert, dass sie die Verbindungsbereiche 12 der Polschuhe 8 formschlüssig aufnehmen. Die Verbindungsbereiche 12 der Polschuhe 8 fungieren somit als Formschluß-Gegenelemente, die mit den nach innen gerichteten Formschlußelementen 16 des Rückschlußrings 2 in Eingriff stehen. Der Rückschlußring 2 begrenzt die Wickelnuten 10 radial. Der Rückschlussring 2 wird zum formschlüssigen Verbinden auf den Innenring 1 aufgepresst. Der Rückschlussring 2 ist durch eine axial wirkende Verstemmung auf dem Innenring 1 fixiert. Das Verstemmen wird durch eine den Randbereich der Polschuh-Stege 7 geringfügig verformende Prägung erzielt.

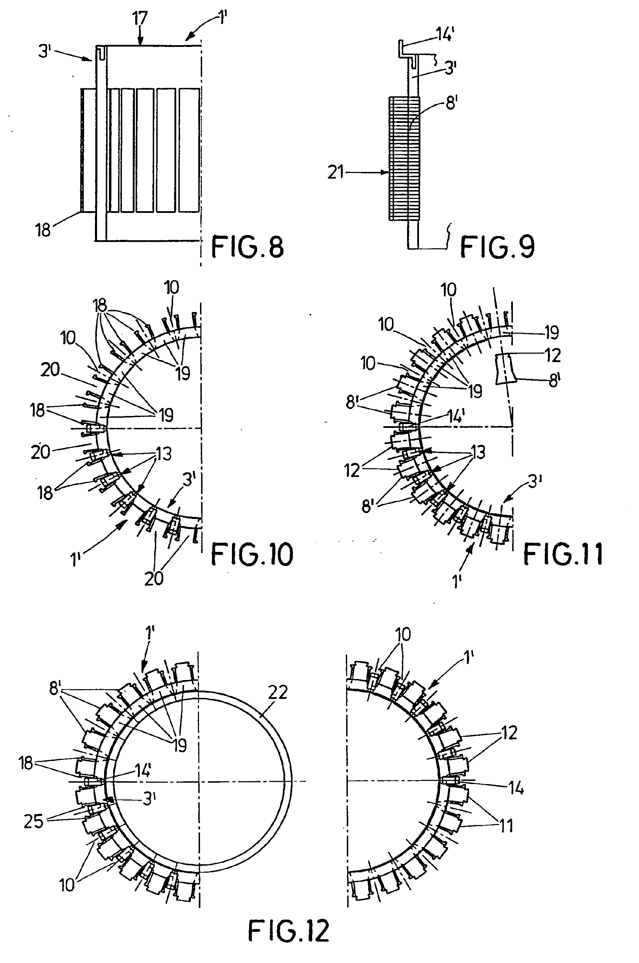

Im Folgenden wird unter Bezugnahme auf die Fig. 8 bis 12 eine zweite Ausführungsform des erfindungsgemäßen Stators beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen, sind jedoch apostrophiert.

Der Stator umfasst - wie bei der ersten Ausführungsform - einen Innenring 1' und einen den Innenring 1' umgebenden Rückschlussring 2, der analog der Ausführungsform gemäß Fig. 1 aufgebaut und geformt ist. Der in der ersten Ausführungsform separate Anschlussring ist bei der Ausführungsform gemäß Fig. 8 bis 12 einstückig mit dem Innenring 1' ausgebildet und durch dessen umlaufende, stirnseitige Ringschulter gebildet.

Der Innenring 1' besteht aus einem Kunststoff-Käfig 17, auf dessen Außenseite dem Rückschlussring 2 zugewandte Radialstege 18 ausgebildet sind. Die Radialstege 18 verlaufen über eine Teillänge des Kunststoff-Käfigs 17 und sind mit ihm einstückig ausgebildet. Bei dem Innenring 1' handelt es sich um ein Spritzgussteil. Die Radialstege 18 sind flexibel ausgestaltet und seitlich axial verlaufender Aufnahme-Ausnehmungen 19 des Innenrings 1' angeordnet. Die Aufnahme-Ausnehmungen 19 sind in dem Innenring 1' durchgängig ausgebildet. Die Radialstege 18 bilden zwischen sich wechselweise einerseits die Wickelnuten 10 und andererseits Aufnahmen 20 für Einzel-Polschuhe 8' aus, wobei sich die Aufnahmen 20 direkt über den Aufnahme-Ausnehmungen 19 befinden. Die Aufnahme-Ausnehmungen 19 verjüngen sich von der Innenseite zu der Außenseite des Innenrings 1'. Die Einzel-Polschuhe 8' sind metallisch und umfassen jeweils ein Blechpaket 21.

Die Einzel-Polschuhe 8' werden bei der Montage des Innenrings 1' von innen durch die Aufnahme-Ausnehmungen 19 in die Aufnahmen 20 radial eingefügt. Der in die Aufnahme-Ausnehmung 19 ragende Bereich des Einzel-Polschuhs 8' wird formschlüssig in der Aufnahme-Ausnehmung 19 aufgenommen, das heißt, er verjüngt sich ebenfalls von der Innenseite des Innenrings 1' aus gesehen. Durch diese verjüngende Ausgestaltung der Aufnahme-Ausnehmungen 19 und der teilweise sich verjüngenden Einzel-Polschuhe 8' wird eine einseitig wirkende radiale Fixierung der Einzel-Polschuhe 8' in dem Innenring 1' erreicht. Um ein Lösen der Einzel-Polschuhe 8' aus den Aufnahmen 20 zu verhindern, wird ein Stützring 22 in die eine Hälfte des Innenrings 1' eingefügt, sodass die Einzel-Polschuhe 8' einerseits durch die sich verjüngende Aufnahme-Ausnehmung 19 und andererseits durch den Stützring 22 fixiert sind. Zum Komplettieren des Innenrings 1' wird die zweite Hälfte des Innenrings 1' mit der ersten Hälfte des Innenrings 1' verbunden. Die Einzel-Polschuhe 8' des zweiten Innenrings 1' liegen dabei ebenfalls an dem Stützring 22 an. Das Bewickeln des Innenrings 1' erfolgt analog dem bereits beschriebenen Flyer-Verfahren. Die Wicklungsspulen 15 werden durch Fixierungsvorsprünge 25 der Radialstege 18 in den Wickelnuten 10 gehalten.

Die Einzel-Polschuhe 8' sind jeweils mit einem dem Rückschlussring 2 zugewandten schwalbenschanzförmigen Verbindungsbereich 12 versehen. Der Verbindungsbereich 12 der Einzel-Polschuhe 8' steht mit den Formschlußelementen 16 des Rückschlußrings 2 in Verbindung und wirkt somit als Formschluss-Gegenelement.

Die in den Fig. 8 bis 12 nicht näher dargestellten Wicklungsspulen 15 des Innenrings 1' können wiederum über Anschlusselemente 14' (Fig. 9) angeschlossen werden, über die jeweils ein Wickelschlag der Wicklungsspule 15 geführt und anschließend in beschriebener Weise elektrisch kontaktiert wird. Die Anschlusselemente 14' bestehen dabei wiederum aus stufenförmigcn Fahnen, die mit ihrem einen Ende in entsprechende Schlitze 26 im stirnförmigen Randbereich des Kunststoff-Käfigs 17 eingeschoben werden. Die Verschaltung der Wicklungsspulen 15 entsprechend einem Verschaltungsschema kann dabei wiederum - in nicht näher dargestellter Weise - durch entsprechende Leitungsverbindungen zwischen einzelnen Anschlussfahnen 14' innerhalb des Kunststoff-Käfigs 17 erfolgen.

Von Vorteil bei der Ausführungsform gemäß den Fig. 8 bis 12 ist im übrigen die Tatsache, dass die Wicklungsspulen 15 mit dem isolierten Wicklungsdraht durch die Radialstege 18 zusätzlich vor den metallischen Einzel-Polschuhen 8' isoliert werden.

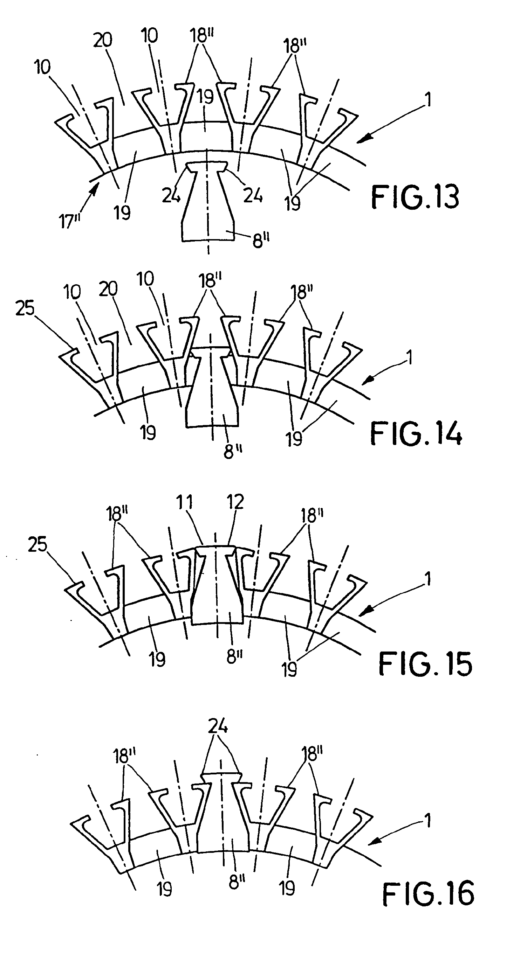

Im Folgenden wird unter Bezugnahme auf die Fig. 13 bis 16 eine dritte Ausführungsform des erfindungsgemäßen Stators beschrieben. Identische Teile erhalten dieselben Bezugszeichen wie bei den ersten beiden Ausführungsbeispielen, auf deren Beschreibung hiermit verwiesen wird. Konstruktiv unterschiedliche, jedoch funktionell gleichartige Teile erhalten dieselben Bezugszeichen, sind jedoch doppelt apostrophiert.

Der Aufbau des Stators entspricht grundsätzlich den ersten beiden Ausführungsformen, wobei Ausgestaltung des Innenrings 1" der zweiten Ausführungsform des Stators ähnelt. Der Innenring 1" besteht nämlich wiederum aus einem Kunststoff-Käfig 17", der Radialstege 18" aufweist. Die die Aufnahmen 20 bildenden Radialstege 18" sind winklig angeordnet und nähern sich radial nach außen einander an, was bedeutet, dass die Aufnahmen 20 sich vom Innenring 1' aus gesehen verengen. Die Wickelnuten 10 erweitern sich dementsprechend. Die Einzel-Polschuhe 8" werden wie bei der zweiten Ausführungsform zwischen den Radialstegen 18" aufgenommen und weisen jeweils einen im wesentlichen trapezförmigen Querschnitt mit zwei abstehenden Rastnasen 24 an ihrer Spitze auf. Die Aufnahme-Ausnehmungen 19 des Innenrings 1" sind wie bei der zweiten Ausführungsform des Stators sich verjüngend ausgebildet. Die Außenkontur der Einzel-Polschuhe 8" entspricht der Geometrie der Aufnahmen 20 und den Aufnahme-Ausnehmungen 19. Die Rastnasen 24 der Einzel-Polschuhe 8" hintergreifen die freien Enden der Radialstege 18", wodurch die Einzel-Polschuhe 18" in den Aufnahmen 20 verrastet werden. Die Radialstege 18" sind zum Verrasten der Einzel-Polschuhe 8" elastisch ausgebildet. Ein Stützring ist somit zum Fixieren der Einzel-Polschuhe 8" in dem Innenring 1" nicht erforderlich.

Alternativ zu dem beschriebenen Flyer-Verfahren kann eine Bewicklung des Stators auch durch das Stecktechnik-Verfahren erfolgen. Die vorgefertigten Wicklungsspulen werden dabei in die Wicklungsnuten des Innenrings unter Deformation und Rückfederung eingesteckt.

| **Bezugszeichenliste** | |
|---|---|
| Innenring | 31 |
| Rückschlussring | 32 |
| Anschlussring | 33 |
| Blechlamellen | 34 |
| Statorblechpaket | 35 |
| Abschlussschulter | 36 |
| Polschuh-Stege | 37 |
| Polschuhe / Einzel-Polschuhe | 38 |
| Ausnehmungen | 39 |
| Wickelnuten | 40 |
| freies Ende der Polschuhe | 41 |
| Verbindungsbereich (Formschluss-Gegenelement) | 42 |
| Anschlüsse | 43 |
| Anschlussbereich (Anschlussfahne) | 44 |
| Wicklungsspulen | 45 |
| Formschlusselemente | 46 |
| Kunststoff-Käfig | 47 |
| Radialstege | 48 |
| Aufnahme-Ausnehmungen | 49 |
| Aufnahmen | 50 |
| Einzel-Polschuh-Blechpaket | 51 |
| Stützring | 52 |
| Fixierungselement | 53 |
| Rastnase | 54 |
| Fixierungsvorsprung | 55 |
| Schlitze | 56 |
| | 57 |
| | 58 |
| | 59 |
| | 60 |

## Patentansprüche

1. Stator für eine elektrische Maschine umfassend
a) einen Innenring (1; 1'; 1") mit
i) Polschuhen (8; 8'; 8") und
ii) außen offenen Wickelnuten (10) zur Aufnahme einer Vielzahl von Wicklungsspulen (15),
b) einen äußeren Rückschlussring (2) mit nach innen gerichteten Formschlusselementen (16), die mit nach außen gerichteten Formschluss-Gegenelementen (12) der Polschuhe (8; 8'; 8") in Eingriff stehen, und
c) einen Anschlussring (3; 3') zum Verschalten der Wicklungsspulen (15).

2. Stator nach Anspruch 1, **dadurch gekennzeichnet, dass** die Formschlusselemente (16) schwalbenschwanzförmig ausgestaltet sind.

3. Stator nach Anspruch 1, **dadurch gekennzeichnet, dass** der aus Kunststoff bestehende Anschlussring (3;3') elektrisch leitfähige Anschlüsse (13) zum Kontaktieren der Wicklungsspulen (15) aufweist.

4. Stator nach Anspruch 3, **dadurch gekennzeichnet, dass** die Anschlüsse (13) zum Kontaktieren der Wicklungsspulen (15) jeweils einen scharfkantigen, die Isolierung der Wicklungsdrähte durchdringenden Kontaktierungs-Schlitz aufweisen.

5. Stator nach Anspruch 3 oder 4, **dadurch gekennzeichnet, dass** der Anschlussring (3;3') mit Leiterbahnen versehen ist, die die Anschlüsse (13) entsprechend einem Verschaltungsschema der Wicklungsspulen (15) elektrisch miteinander verbinden.

6. Stator nach Anspruch 1, **dadurch gekennzeichnet, dass** die Anschlüsse (13) jeweils als hakenförmige Anschlussfahnen (14) ausgebildet sind.

7. Stator nach Anspruch 1, **dadurch gekennzeichnet, dass** der Innenring (1) aus Blechlamellen (4) besteht, wobei jede Blechlamelle (4) die Polschuhe (8) bildende Polschuh-Stege (7) aufweist, die einstückig mit dem Innenring (1) ausgebildet sind.

8. Stator nach Anspruch 1, **dadurch gekennzeichnet, dass** der Innenring (1'; 1") aus einem Kunststoff-Käfig (17; 17") besteht und radial durchgehende, dem Rückschlussring (2) zugewandte Aufnahmen (20) für die als Einzelschuhe (8', 8") ausgebildeten Einzel-Polschuhe aufweist.

9. Stator nach Anspruch 8, **dadurch gekennzeichnet, dass** die Einzel-Polschuhe (8") in den Aufnahmen (20) verrastbar sind.

10. Stator nach Anspruch 8, **dadurch gekennzeichnet, dass** der Kunststoff-Käfig (17; 17") Radialstege (18; 18") aufweist, die zwischen sich wechselweise die Wickelnuten (10) und Aufnahmen (20) für die Einzel-Polschuhe (8'; 8") bilden.

11. Stator nach Anspruch 8, **dadurch gekennzeichnet, dass** der Anschlussring (3') einstückig mit dem Kunststoff-Käfig (17) ausgebildet ist.
